Europäisches Patentamt

European Patent Office

Office européen des brevets

(19)

(11) EP 0 605 297 B1

(12) FASCICULE DE BREVET EUROPEEN

(45) Date de publication et mention
de la délivrance du brevet:
**20.05.1998 Bulletin 1998/21**

(51) Int Cl.⁶: **G01N 21/41**, G01M 11/00

(21) Numéro de dépôt: 93403150.1

(22) Date de dépôt: 23.12.1993

(54) **Appareil de mesure de profil d'indice d'une préforme de fibre optique comportant une enveloppe externe et un coeur**

Gerät zur Messung des Indexprofils einer Vorform für eine aus einer äusseren Hülle und einem Kern bestehende optische Faser

Device for the measurement of the index profile of a preform for an optical fibre comprising a core and an outer cladding

(84) Etats contractants désignés:
DE GB

(30) Priorité: 24.12.1992 FR 9215731

(43) Date de publication de la demande:
06.07.1994 Bulletin 1994/27

(73) Titulaire: FRANCE TELECOM
75015 Paris (FR)

(72) Inventeurs:
• **Nolf, Michel**
**F-22450 Laroche (FR)**
• **Chollet, Patrick**
**F-22300 Lannion (FR)**
• **Fossey, Paul**
**F-22730 Tregastel (FR)**

(74) Mandataire: **Martin, Jean-Jacques et al**
**Cabinet REGIMBEAU**
**26, Avenue Kléber**
**75116 Paris (FR)**

(56) Documents cités:
**WO-A-91/17425**

• **PATENT ABSTRACTS OF JAPAN vol. 10, no. 344
(P-518) (2400) 20 Novembre 1986 & JP-A-61 145
432 (SASAKI) 3 Juillet 1986**
• **PATENT ABSTRACTS OF JAPAN vol. 11, no. 121
(P-568) 16 Avril 1987 & JP-A-61 266 932
(SUMITOMO ELECTRIC) 26 Novembre 1986**
• **PATENT ABSTRACTS OF JAPAN vol. 15, no. 210
(P-1208) 29 Mai 1991 & JP-A-03 057 936
(FUJIKURA) 13 Mars 1991**

## Description

La présente invention est relative à un appareil de détermination du profil d'indice d'une préforme de fibre optique. Dans le domaine technique des préformes pour fibres optiques, existent certaines contraintes qu'il faut impérativement satisfaire. Les préformes actuelles, par exemple du type POID, FCVD, ou VAD (ce qui selon la terminologie anglo-saxonne, signifie Plasma Outside Inside Deposition, Furnace Chemical Deposition et Vapor axial Deposition, d'après les procédés de fabrication), ont des diamètres de plus en plus grands. En outre, certaines applications nécessitent la fabrication de préformes ayant un indice de coeur très élevé (de l'ordre de $50.10^{-3}$) ; par exemple pour la fabrication des fibres à amplification optique.

La contrainte relative à l'indice (de réfraction) du coeur d'une préforme concerne les amplificateurs lasers, alors que la contrainte relative au diamètre d'une préforme concerne la capacité de fibrage de celle-ci, c'est-à-dire la longueur de fibre qu'on peut obtenir d'un seul tenant à partir d'une préforme donnée, cette capacité étant actuellement de l'ordre de 200 km et susceptible d'augmenter considérablement dans un avenir relativement proche, compte tenu de la nécessité de réduire le nombre de liaisons sous-marines entre deux récepteurs, par exemple.

Le seul appareil de mesure, du type évoqué plus haut, existant sur le marché, qui est susceptible de répondre - au moins partiellement - aux besoins des utilisateurs, est couvert par plusieurs brevets, tels que EP-A2-0277818, WO-90/05904 et WO-91/17425. Toutefois, cet appareil connu présente plusieurs inconvénients, notamment en ce qui concerne :

1) le prix, qui est très élevé et qui n'est pas accessible à la plupart des laboratoires dans lesquels la détermination du profil d'indice d'une préforme de fibre optique peut être effectuée ;

2) le mode d'emploi, qui implique l'entraînement en mouvement de la préforme par rapport à une cellule de mesure, ce qui peut avoir comme conséquence, - à la suite de manipulation accidentellement erronée -, l'endommagement de la préforme, qui doit être écartée et remplacée par une autre, avec une perte de gain considérable si l'on considère que le prix actuel d'une fibre optique est d'environ 1 F/m ;

3) le milieu liquide transparent de continuité, c'est-à-dire d'isotropie d'indice, optique entourant la préforme, qui est en contact direct avec celle-ci, ce qui pose de sérieux problèmes d'étanchéité et de nettoyage en cas de fuites de liquide, ce dernier ayant la consistance d'une huile ;

4) le diamètre des préformes, qui est compris dans une plage de valeurs relativement restreinte, nécessitant ainsi l'utilisation d'un nombre relativement élevé de cellules de mesure, chaque cellule acceptant seulement des préformes dont le diamètre est compris entre deux valeurs extrêmes relativement rapprochées ;

5) la variation d'indice de préforme mesurable $\Delta n$, qui est inférieure à $40\ 10^{-3}$, alors que le besoin est d'atteindre les valeurs suivantes :

$$-10^{-2} < \Delta n < +5\ 10^{-2}\ ;$$

6) la longueur des préformes, qui est limitée par les contraintes d'encombrement ;

7) les contraintes d'alignement de la préforme par rapport à la cellule de mesure, qui sont très sévères.

Aussi, le problème technique à résoudre consiste à concevoir un appareil de mesure du type évoqué ci-dessus qui répond aux nécessités de la technique mieux que les appareils du même type, et visant le même but, antérieurement connus, notamment en ce qui concerne les contraintes définies sous 1) à 7) ci-dessus. JP-A-61-145 432 peut être cité ici comme document divulgant un film isolant assurant l'étanchéité entre une solution et une préforme dont l'indice de réfraction est mesuré.

La présente invention a pour objet un appareil de mesure de profil d'indice d'une préforme de fibre optique comprenant une enveloppe externe et un coeur, comprenant :

- des moyens de support de la préforme ;
- des moyens d'émission d'un faisceau optique destiné à explorer une section transversale de la préforme suivant un diamètre de celle-ci ;
- une cellule de continuité d'indice comprenant une enceinte pourvue d'une ouverture traversante, assurant l'application de l'enceinte autour d'une zone annulaire périphérique de la préforme, et d'une cavité ménagée dans l'enceinte de manière à entourer l'enveloppe précitée et à être en communication optique avec celle-ci ;
- un milieu déformable et transparent pour le faisceau optique, contenu dans la cavité de l'enceinte et assurant la continuité, c'est-à-dire l'isotropie, d'indice optique, autour de la préforme, par rapport à l'indice de l'enveloppe de celle-ci, et ce en passant d'une première surface optique, qui est une surface d'entrée du faisceau optique d'exploration diamétrale de la préforme, à travers ledit milieu, à une deuxième surface optique, qui est une surface de sortie du faisceau optique, les première et deuxième surfaces optiques d'entrée et de sortie étant ménagées dans l'enceinte transversalement par rapport à l'axe longitudinal de la préforme, leur dimension transversale étant au moins égale au diamètre de la préforme ;

- des moyens d'exploration diamétrale de la section transversale de la préforme, suivant son diamètre, par ce faisceau optique ;
- des moyens de repérage spatial de la position du faisceau optique incident sur la préforme, par rapport à la cellule de continuité d'indice ;
- des moyens de réception du faisceau optique transmis à travers la préforme, avec déviation, par rapport à chaque point d'incidence du faisceau émis, ces moyens de réception effectuant en outre la mesure de la déviation du faisceau transmis à travers la préforme, par rapport à chaque point d'incidence, et délivrant un signal fonction de cette déviation ;
- des moyens assurant le traitement de chacun des signaux délivrés par les moyens de réception et de mesure ainsi que le calcul de la variation d'indice de la préforme, suivant un diamètre de sa section transversale, par rapport à l'indice dudit milieu, et ce à partir d'un ensemble de mesure de déviation, lequel appareil est caractérisé en ce que, entre le milieu déformable d'isotropie d'indice et la surface externe del'enveloppe de la préforme, existe une interface de séparation déformable et transparente assurant l'adaptation du milieu déformable d'isotropie d'indice à la surface externe de l'enveloppe de la préforme sur au moins la zone annulaire de celle-ci, qui correspond à une zone de mesure optique située sur le parcours du faisceau optique, cette interface déformable et transparente, ainsi que les surfaces optiques d'entrée et de sortie du faisceau otpique, ayant un indice proche de l'indice dudit milieu.

Selon une disposition avantageuse de ce mode de réalisation, le milieu d'isotropie d'indice est constitué par un produit transparent, liquide ou visqueux, l'interface déformable et transparente étant constituée par une membrane annulaire élastique et imperméable, et l'appareil comportant également des moyens d'injection du produit dans la cavité de l'enceinte de la cellule de continuité d'indice.

L'emploi d'une telle interface de séparation transparente, élastique et imperméable, entre le milieu, liquide ou visqueux, d'isotropie d'indice et l'enveloppe (ou gaine) externe de la préforme permet d'éliminer le problème des fuites d'un tel milieu, tout en assurant l'application de la même cellule de continuité d'indice à des préformes dont le diamètre varie dans une plage relativement étendue.

Selon une variante préférée de cette disposition, la membrane élastique imperméable se prolonge, à partir de chaque bord annulaire transversal, par rapport à l'axe longitudinal de la préforme, d'abord radialement vers l'extérieur et, ensuite, longitudinalement vers l'intérieur de la zone de mesure optique, de manière à définir une chambre continue étanche, sensiblement toroïdale , destinée à être logée dans la cavité de l'enceinte et à être remplie du produit transparent précité.

Cette variante permet d'améliorer sensiblement l'étanchéité de l'appareil par rapport au milieu d'isotropie optique, tout en gardant la même souplesse en ce qui concerne l'adaptation de la cellule de continuité d'indice à différents diamètres de préformes.

Selon un autre mode de réalisation préféré, au moins les moyens d'émission et de réception et mesure, conjointement avec les moyens d'exploration diamétrale de la section transversale de la préforme ainsi qu'avec les moyens de traitement et calcul précités, sont intégrés dans un ensemble unitaire faisant cellule de mesure et ayant sensiblement la configuration d'un fer à cheval destiné à coopérer avec l'enceinte entourant la préforme et contenant le milieu d'isotropie d'indice, pour effectuer la détermination du profil d'indice de cette préforme, les moyens d'émission étant disposés à l'intérieur du premier bras du fer à cheval, alors que les moyens de réception et mesure sont disposés dans le deuxième bras, opposé au premier, le premier et le deuxième bras comportant, respectivement, une première fenêtre de passage du faisceau émis par le premier bras et une deuxième fenêtre de passage du faisceau reçu par le deuxième bras.

Selon une disposition préférée du deuxième mode de réalisation évoqué ci-dessus, les moyens d'exploration transversale de la préforme, intégrés dans la cellule de mesure, comprennent :

- deux rails de glissement relatif entre la cellule de mesure et la cellule de continuité d'indice transversalement par rapport à l'axe longitudinal de la préforme ;
- deux gorges transversales de guidage des deux rails de glissement relatif ;
- des moyens d'entraînement de la cellule de mesure parallèlement aux surfaces d'entrée et de sortie de la cellule de continuité d'indice.

Conformément à une modalité avantageuse de cette disposition :

- les deux rails de glissement relatif entre la cellule de mesure et la cellule de continuité d'indice sont ménagés sur les deux côtés internes des deux bras opposés de la cellule de mesure en fer à cheval ;

- les deux gorges de guidage de ces deux rails sont ménagées dans deux côtés de la cellule de continuité d'indice qui sont transversaux par rapport à l'axe longitudinal de la préforme et qui correspondent respectivement aux surfaces d'entrée et de sortie du faisceau optique d'exploration transversale de la préforme, ces surfaces d'entrée et de sortie occupant le fond des gorges de guidage.

Egalement conformément à une variante avantageuse de cette modalité :

- les deux rails de glissement relatif entre la cellule de mesure et la cellule de continuité d'indice sont ménagés sur deux côtés de cette dernière, qui sont transversaux par rapport à l'axe longitudinal de la préforme et qui correspondent aux surfaces d'entrée et de sortie du faisceau optique d'exploration transversale de la préforme, ces surfaces d'entrée et de sortie occupant le côté radialement externe des deux rails ;
- les deux gorges de guidage des deux rails de glissement relatif sont ménagées dans les côtés internes des deux bras opposés de la cellule de mesure en fer à cheval.

Selon une autre disposition préférée du deuxième mode de réalisation évoqué plus haut et s'appliquant aux deux modalités ci-dessus, les moyens d'entraînement de la cellule de mesure comprennent une poignée ménagée dans le bras de liaison entre les deux bras opposés de cette cellule de mesure en fer à cheval, cette poignée étant destinée à assurer le glissement progressif de la cellule de mesure par un opérateur, transversalement par rapport à l'axe longitudinal de la préforme et parallèlement aux surfaces d'entrée et de sortie de la cellule de continuité d'indice, et ce à l'aide de moyens de repérage spatial, notamment de la position du faisceau optique incident sur la préforme.

Conformément à une variante avantageuse de cette autre disposition, les moyens d'entraînement de la cellule de mesure comprennent deux moteurs d'avancement pas à pas de deux crémaillères motrices, disposées chacune autour des côtés axialement externes de chaque rail de glissement relatif, ainsi que des logements qui sont distribués le long des parois opposées axialement internes de chaque gorge transversale de guidage d'un rail correspondant et qui sont destinés à recevoir les dents de la crémaillère correspondante, au fur et à mesure de l'avancement de celle-ci.

Conformément à encore une autre disposition avantageuse du deuxième mode de réalisation précité, dans la cellule de mesure sont intégrés également des moyens d'affichage et/ou des moyens de saisie de données et/ou des moyens de restitution de données par interface ordinateur.

Conformément à l'invention, les moyens de repérage spatial de la position du faisceau optique incident sur la préforme comprennent une réglette magnétique solidarisée à la cellule de continuité d'indice, notamment par collage, et de préférence alignée suivant la dimension transversale de la surface d'entrée du faisceau d'exploration transversale de la préforme ; en outre, la cellule de continuité d'indice coopère avec les moyens assurant le maintien en position de cette cellule par rapport à la zone de mesure localisée sur la préforme,et ces moyens de maintien en position de la cellule de continuité d'indice comprennent deuxdeux anneaux latéraux de serrage, disposés de part et d'autre par rapport à cette cellule et équipés de joints toriques, notamment élastomères, logés chacun dans une gorge annulaire ménagée dans la paroi interne de chaque anneau, chaque joint torique assurant le serrage à force de l'anneau correspondant sur la préforme et donc le maintien en position de la cellule de continuité d'indice par rapport à cette préforme.

D'autres avantages de l'invention apparaîtront à l'examen de la description détaillée ci-après et des dessins annexés, dans lesquels :

- la Figure 1 est une vue schématique en perspective dans le sens axial, et avec arrachements, d'un mode de réalisation d'une cellule de continuité d'indice optique selon l'invention ;
- la Figure 2 est une variante préférée du mode de réalisation illustré à la Figure 1 ;
- la Figure 3 est une vue schématique en perspective, et avec éclatements, d'un mode de réalisation d'une cellule de mesure selon l'invention ;
- la Figure 4 est une représentation schématique en perspective et partielle d'un mode de réalisation d'un dispositif magnétique de repérage spatial ;
- la Figure 5 illustre le principe de mesure de l'angle de déviation ;
- la Figure 6 illustre une variante relative à la mesure de l'angle de déviation ; et
- la Figure 7 illustre schématiquement, à l'aide de diagrammes à blocs, un principe de traitement de signaux adopté dans le cadre de la présente invention.

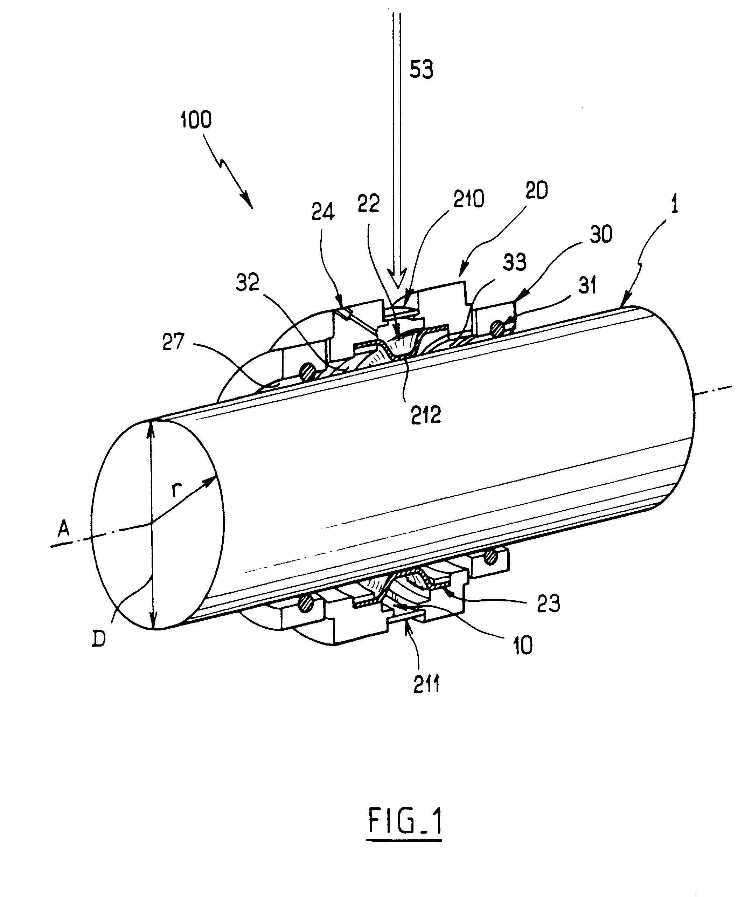

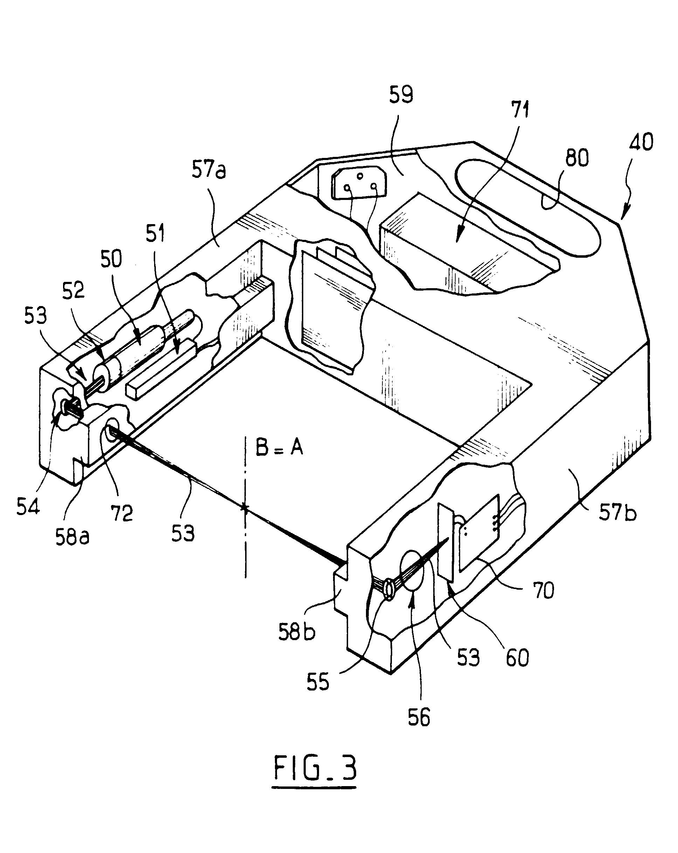

On se réfère d'abord à la Figure 1, où est représentée schématiquement en perspective une préforme cylindrique de fibre optique 1, pour laquelle on veut déterminer le profil d'indice. Sur cette préforme 1 (qui est supportée par des moyens appropriés, non représentés mais qui peuvent avantageusement être constitués par des supports en V) est appliquée une cellule, sensiblement toroïdale, de continuité d'indice 100. Un mode de réalisation de la cellule de continuité d'indice 100, en accord avec la présente invention, comprend une enceinte 20 dans laquelle est ménagée une cavité 10 sensiblement toroïdale, métallique par exemple, et délimitée radialement vers l'extérieur par deux faces optiques diamétralement opposées et de préférence planes, respectivement d'entrée 210 et de sortie 211, parallèles entre elles (à ± 1 minute d'angle près) et traversées par un faisceau optique 53 (cf aussi la Figure 3), et, radialement vers l'intérieur, par une surface déformable 23 de qualité optique. Les indices de réfraction des faces 210 et 211 et de la surface déformable 23 sont proches de (ou sensiblement égaux à) l'indice de la surface externe de la préforme 1 à analyser. Pour des préformes en silice, on choisira de préférence des faces 210 et 211 en silice et une surface déformable 23 en silicone. La cavité est remplie d'un matériau déformable 22, optiquement homogène et d'indice proche de (ou sensiblement égal à) celui des éléments 210, 211 et 23 : il est ainsi assuré pratiquement la continuité - c'est-à-dire l'isotropie d'indice de réfraction du milieu entourant la préforme cylindrique 1, par rapport à l'indice de l'enveloppe de celle-ci. Le matériau déformable 22 peut être de l'Aliphatic hydrocarbon hydrogenate d. Terphenyl (marque déposée), par exemple.

Dans la pratique, l'enceinte 20 de la cellule de continuité d'indice 100 est destinée à être disposée - grâce à la présence d'une ouverture axiale 27 donnant à l'enceinte 20 une configuration sensiblement toroïdale - autour de la préforme cylindrique 1, comme le montre la Figure 1 : grâce à la paroi déformable 23, on peut adopter un jeu relativement important entre cette paroi et la surface externe de la préforme, ce qui permet d'appliquer l'appareil selon l'invention à des préformes ayant des diamètres variables dans une plage de valeurs relativement étendue ; il est ainsi possible d'utiliser un nombre restreint (relativement réduit) de cellules de continuité d'indice voire une cellule unique. Bien entendu, le jeu est comblé lors de l'injection sous pression du mileu d'isotropie d'indice 22, lorsque la paroi déformable transparente 23, notamment constituée par une membrane élastique étanche en silicone (comme déjà évoqué plus haut) dans le cas où le milieu d'isotropie d'indice 22 est liquide comme dans l'exemple donné plus haut. Le placage de la membrane 23 peut être limité à une zone annulaire périphérique de la préforme correspondant à la zone de mesure optique 212 située sur le parcours du faisceau 53. Un maintien stable et centré, par rapport à l'axe longitudinal A de la préforme 1, est réalisé par des moyens de blocage constitués par des anneaux 30 et des joints toriques 31, rendant ainsi solidaire l'ensemble et assurant un parallélisme entre l'axe A de la préforme cylindrique 1 et les plans d'entrée et de sortie des faces d'entrée et de sortie 210 et 211. Les références 32 et 33 se rapportent à deux bagues de placage étanche de la membrane 23 contre deux épaulements internes de l'enceinte annulaire 20 de la cellule de continuité d'indice 100.

La continuité d'indice entre les faces d'entrée et de sortie 210 et 211 est assurée donc par le contact sous pression entre la face - externe par rapport à la cavité 10 - de la membrane 23 et la surface externe de la préforme 1, de manière à chasser l'air entre cette membrane et la préforme.

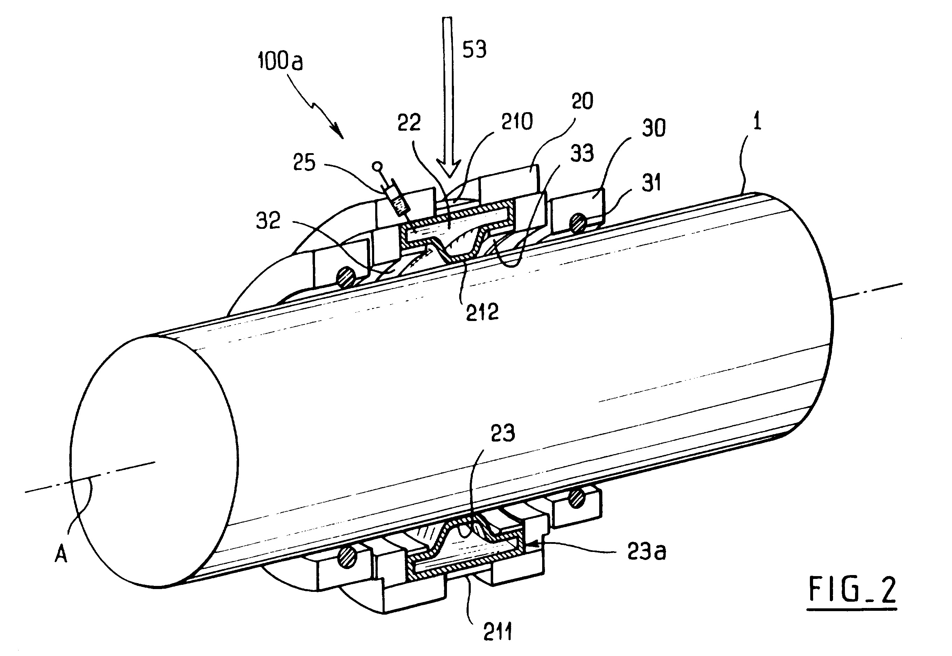

L'introduction du matériau déformable 22 se fait à travers un orifice d'injection 24, par des moyens d'injection (non représentés à la Figure 1, mais illustrés schématiquement à la Figure 2 sous la référence 25), avec une pression suffisante, justement pour réaliser le contact d'au moins une aire de quelques mm$^2$ de la paroi déformable 23 sur la zone de mesure optique 212 de la préforme 1.

La Figure 2 est une variante 100a de réalisation de la cellule de continuité d'indice qui diffère par rapport à la cellule 100 de la Figure 1 en ce que la surface déformable, faisant interface optique de séparation entre le milieu d'isotropie d'indice 22 et la surface externe de la préforme 1, est constituée par le côté interne d'une chambre élastique et étanche 23a - similaire à une sorte de bouée ou de chambre à air de bicyclette par exemple qui, sous l'effet de l'injection sous pression du milieu d'isotropie d'indice 22 à l'intérieur de cette chambre, prend une configuration sensiblement toroïdale. Cette variante a l'avantage d'améliorer l'étanchéité de l'appareil.

La cellule de continuité d'indice, 100 ou 100a, est munie de moyens mécaniques de guidage et de repérage aux fins de recevoir des moyens nécessaires pour la mesure optique, l'acquisition de l'angle de déviation et le calcul du profil d'indice de la préforme, dont la Figure 3 et les figures suivantes en présentent un exemple de réalisation.

Ces moyens de guidage visent à assurer l'orthogonalité entre la direction du faisceau optique 53 et les faces optiques d'entrée 210 et de sortie 211 de la cellule de continuité d'indice, 100 ou 100a. Ces moyens peuvent être réalisés mécaniquement par des moyens de guidage conventionnels ménagés dans la cellule de mesure 40 et sur la cellule de continuité d'indice, 100 ou 100a. De préférence,les plans du guidage mécanique sont référencés par rapport aux faces optiques 210 et 211, d'une part, et par rapport aux rails 58a et 58b (qui seront décrits ci-après), d'autre part.

De façon plus précise, la Figure 3 illustre un mode de réalisation d'une cellule de mesure 40 réalisée en accord avec la présente invention et ayant la configuration d'un fer à cheval ; cette cellule 40 comprend :

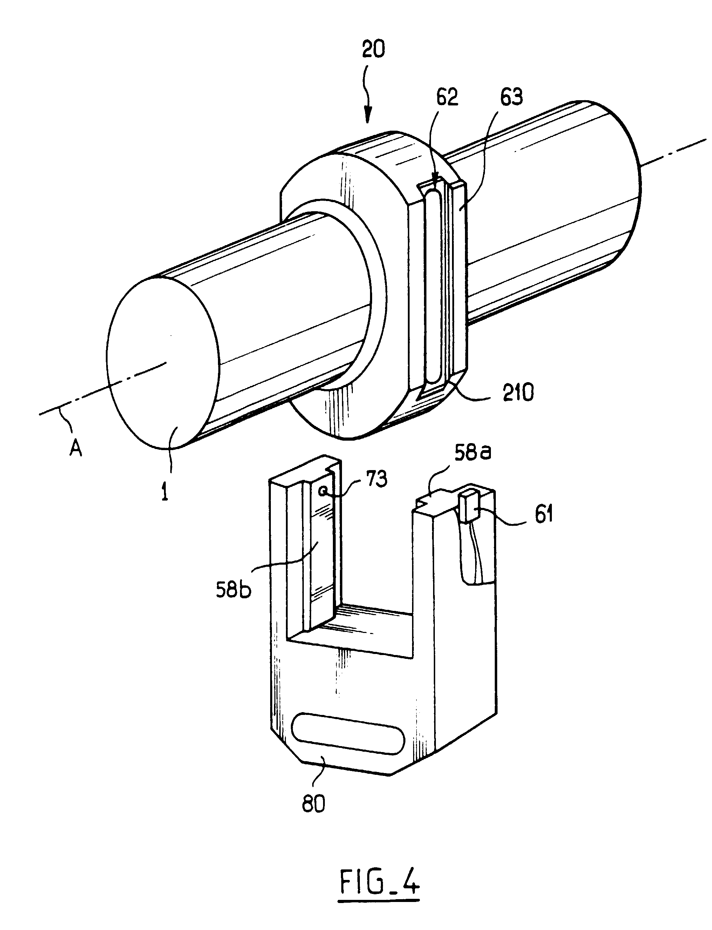

- des moyens nécessaires à l'émission d'un faisceau lumineux 53 comprenant - dans cet exemple - un laser à semiconducteur (une diode ) 50, émettant à 632 nm et associé à son alimentation 51, et un collimateur 52 du faisceau optique 53, assurant le positionnement du Waist du faisceau 53 (c'est-à-dire de la partie la plus étroite du faisceau laser 53), dont la taille est de l'ordre de 10 μm dans l'axe B coïncidant approximativement avec l'axe longitudinal A de la préforme 1 ;
- des moyens de renvoi optique 54 et 55, tels que des miroirs optiques, de surfaces au moins égales à celle correspondant à la section du faisceau optique 53, ce faisceau traversant les deux bras opposés de la cellule de mesure 40 par deux fenêtres 72 et 73 (cf. la Figure 3 et la Figure 4) ;

- des moyens optiques 56, tels qu'une lentille optique, pour la focalisation du faisceau optique 53 ;
- des moyens de mesure 60, tels qu'une cellule de détection photosensible de 30 mm de hauteur et 5 mm de largeur par exemple, sensible à la longueur d'onde du faisceau 53, sur lesquels se focalise ce faisceau et délivrant un signal électrique proportionnel à la position de l'éclairement par le faisceau 53 focalisé par les moyens optiques 56, par rapport à la position d'origine, et ce pour chaque point d'incidence du faisceau optique 53 sur la préforme 1 ;
- des moyens de traitement et d'acquisition 70 de ces signaux, tels qu'une carte à microprocesseur dotée d'une carte d'acquisition ;
- des moyens d'autonomie de fonctionnement 71, tels que des accus rechargeables, assurant un fonctionnement autonome du dispositif pendant au moins une heure.

Les moyens 50 à 52 et 54 sont intégrés dans un bras, 57a, de la cellule de mesure en fer à cheval 40, alors que les moyens 55, 56, 60 et 70 sont intégrés dans le deuxième bras 57b. Les accus 71 sont intégrés dans le bras 59 de liaison entre les bras opposés 57a et 57b de la cellule de mesure 40.

En plus des moyens ci-dessus, donnés à titre d'exemple non limitatif, des moyens assurant des fonctions annexes, - telles que l'affichage d'information, la saisie de données ou encore la restitution d'acquisitions par interface ordinateur -, peuvent être intégrées à la cellule de mesure 40 (ces moyens additionnels n'étant pas illustrés sur les figures pour des raisons de simplification des dessins).

Dans le bras de liaison 59 est ménagée une poignée de préhension 80 de la cellule de mesure 40 facilitant l'application de celle-ci sur la cellule de continuité d'indice. Cette poignée de préhension 80 définit un moyen d'entraînement de la cellule de mesure 40 parallèlement aux surfaces d'entrée et de sortie 210 et 211 de la cellule de continuité d'indice, et fait partie des moyens d'exploration transversale de la préforme conjointement avec deux rails de glissement relatif - 58a et 58b - entre la cellule de mesure 40 et la cellule de continuité d'indice - 100 ou 100a - et deux gorges rectilignes (dont seulement une gorge 62 est visible sur la Figure 4) de guidage des deux rails précités. Dans l'exemple illustré à la Figure 4, les rails sont ménagés sur les côtés internés des deux bras opposés 57a et 57b de la cellule de mesure 40, alors que les deux gorges 62 sont ménagées sur les côtés externes de la cellule de continuité d'indice, 100 ou 100a. Bien entendu, ces deux gorges sont centrées par rapport aux deux surfaces optiques d'entrée et de sortie 210 et 211, ces dernières occupant le fond des gorges correspondantes. Toutefois, il est- clair que la disposition des rails et des gorges peut être inversée. Dans chaque cas, il est de toute façon possible de glisser la cellule de mesure 40 à l'aide de la poignée 80 sur la cellule de continuité d'indice, 100 ou 100a, et de la faire avancer progressivement à l'aide de moyens de repérage spatial, qui sont décrits par la suite.

En pratique, l'alignement optique est obtenu en réglant approximativement l'angle de renvoi du faisceau 53 par les miroirs 54 et 55, afin que le faisceau 53 passe par l'axe optique de la lentille 56 et coïncide approximativement avec le centre de la cellule de détection 60. Les moyens de traitement 70 assurent la compensation automatique de l'erreur de réglage optique, ce qui se traduit par un signal délivré par le détecteur 60 différent de zéro volt.

C'est pour limiter tout incidence de déréglage due à la variation de la température, aux vibrations, etc., que les moyens optiques 50 à 56 et la cellule de détection 60, intégrés dans les deux bras 57a et 57b de la cellule de mesure 50, sont avantageusement solidarisés aux deux bras 57a et 57b réalisés en matériau à faible coefficient de dérive, tel que de la silice ou de l'alumine par exemple.

En outre, avant la mesure, l'opérateur effectue une initialisation de l'électronique de mesure. La cellule de mesure 40 vient chevaucher l'enceinte toroïdale 20 de la cellule de continuité d'indice, 100 ou 100a, enserrant la préforme 1 maintenue en place par les moyens de serrage 30 et 31. Dans un mouvement d'aller et de retour, sous le contrôle des moyens de repérage 63 précités, le faisceau optique 53 vient scruter la préforme 1 en traversant celle-ci de part en part. L'angle de déviation est alors acquis.

Un mode de réalisation des moyens de repérage spatial de la position du faisceau optique incident 53, par rapport à la cellule de continuité d'indice 100 ou 100a, comprend une réglette magnétique 63 solidarisée à l'enceinte 20, par exemple par collage.

Cette réglette magnétique 63 est de préférence alignée suivant la face optique d'entrée 210 et a une longueur suffisante pour couvrir l'étendue de mesure de la préforme 1 suivant le diamètre correspondant de celle-ci. Une deuxième cellule de détection 61, sensible à l'inversion des pôles magnétiques, distants d, de la réglette 63, - telle qu'une cellule à effet Hall par exemple -, et reliée à l'électronique 70, assure - par un couplage du nombre d'inversion - la connaissance de la position relative du faisceau optique 53, avec une précision de ± d/2.

La cellule 61 est avantageusement solidaire d'un des bras opposés, 57a ou 57b, de la cellule de mesure 40, et ce pour référencer la mesure par rapport au plan de référence de la cellule 40.

Un avantage certain de ce mode de réalisation concerne la mesure sans contact d'une position relative, d'une part, et d'un pas de mesure d parfaitement connu, d'autre part.

Le pas de mesure d est choisi en fonction du diamètre du Waist du faisceau optique 53. Dans la pratique, si on définit ce diamètre à environ 10 μm ; le pas de mesure d est de l'ordre de 5 μm au minimum et de 10 μm au maximum, par exemple.

La solution de repérage spatial permet de s'affranchir de la nécessité d'un déplacement linéaire d'aller et de retour de la cellule de mesure 40, lors de la mesure par acquisition simultanée de la position relative et de l'angle de déviation. La linéarisation est donc automatiquement réalisée.

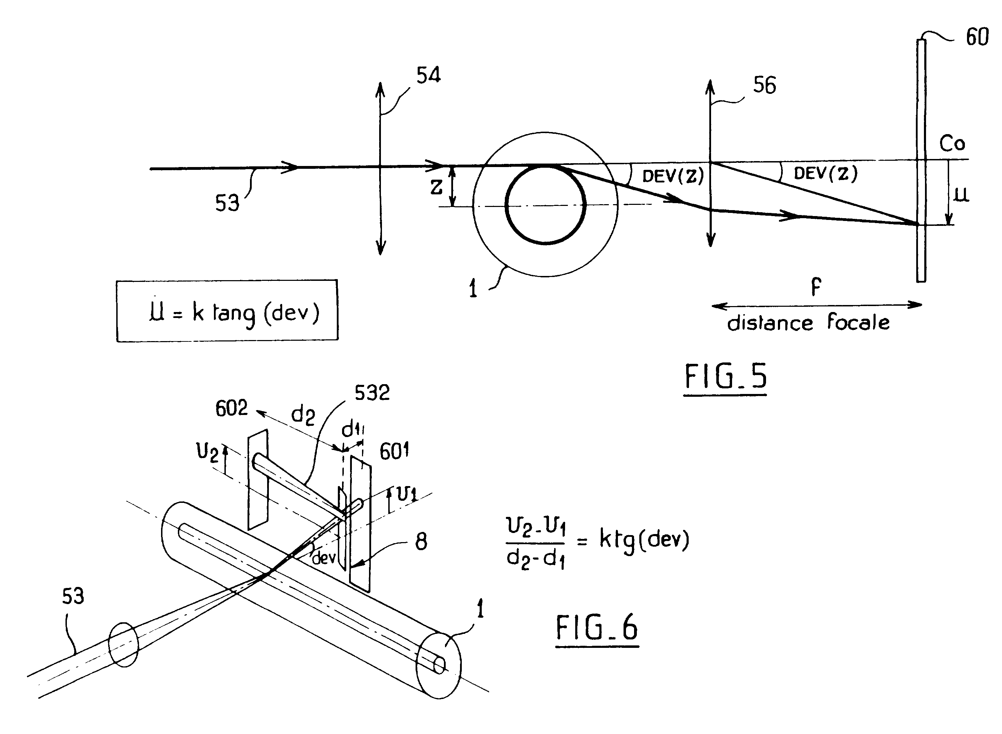

On se réfère maintenant à la Figure 5. On y présente un mode de mise en oeuvre du principe de mesure de l'angle de déviation, noté "dev" du faisceau optique 53 traversant la préforme 1 ; ce dispositif comprend une optique d'entrée 54, une optique de sortie 56, et une cellule de détection 60, sensible à la longueur d'onde du faisceau optique 53, délivrant un signal électrique et placée au foyer de la lentille 56.

La cellule de détection 60 est positionnée de telle sorte que, en l'absence de cellule de continuité d'indice, 100 ou 100a, le signal électrique dû à l'éclairement par le faisceau optique 53 soit nul ou comparable au bruit électronique.

En présence de la cellule de continuité optique, 100 ou 100a, enserrant la préforme 1, la cellule de détection 60 délivre un signal électrique proportionnel à la valeur u correspondant à la distance entre la position de l'axe optique B et la position de la tâche lumineuse sur la cellule 60. La valeur u est reliée à l'angle de déviation par la relation suivante :

$$u = k \tan (dev)$$

où k est une constante de proportionnalité qui peut être facilement déterminée à partir d'une déviation "dev" connue.

Dans la réalisation pratique, les optiques comprenant les moyens 54 et 56, ainsi que la cellule 60, sont avantageusement solidaires, et donc référencées, aux bras opposés 57a et 57b de la cellule de mesure 40, assurant ainsi la rigidité de l'ensemble. La lentille d'entrée 54 présente, par exemple, une focale de 60 mm et un diamètre de 10 mm, alors que la lentille de sortie 56 a une focale de 60 mm et un diamètre également de 60 mm.

Un autre exemple de mise en oeuvre du principe de mesure de l'angle de déviation "dev" est illustré à la Figure 6, où la solution adoptée nécessite deux cellules de détection, 601 et 602, du même type que la cellule 60 de la Figure 5 par exemple, et d'une lame semi-réfléchissante 8 (les éléments 601, 602 et 8 sont avantageusement rendus solidaires des bras opposés de la cellule de mesure 40). L'arrangement optique est réalisé comme suit : le faisceau optique 53 est séparé en deux faisceaux optiques 531 et 532 par la lame semi-réfléchissante 8 ; le faisceau 531 vient éclairer la cellule 601 alors que le faisceau 532 vient éclairer la cellule 602. En l'absence de cellule de continuité d'indice, 100 ou 100a, enserrant la préforme 1, les axes des faisceaux optiques 531 et 532 coïncident, respectivement et approximativement, avec les positions des cellules de détection 601 et 602, pour lesquelles les tensions délivrées, $U_1$ et $U_2$, sont nulles ou de l'ordre du bruit électronique. Un traitement électronique de la différence ($U_1$ - $U_2$) permet d'assurer une valeur de la mesure de l'angle de déviation nulle. La déviation "dev", obtenue en intercalant la cellule de continuité d'indice enserrant la préforme 1, et correspondant à une position spatiale donnée, est obtenue à partir de la formule :

$$(U_2 - U_1)/(d_2 - d_1) = k \tan (dev)$$

où $d_1$ et $d_2$ sont, respectivement, les distances séparant la lame semi-réfléchissante 8 des cellules de mesure 601 et 602 ; k est une constante de conversion qui peut être facilement déterminée à partir d'une déviation "dev" connue.

Dans la réalisation pratique, la lame semi-réfléchissante 8 fait 10 mm de large, 50 mm de hauteur et 1 mm d'épaisseur, par exemple . Les cellules sensibles 601 et 602 sont par exemple du type commercialisé par SITEK (marque déposée).

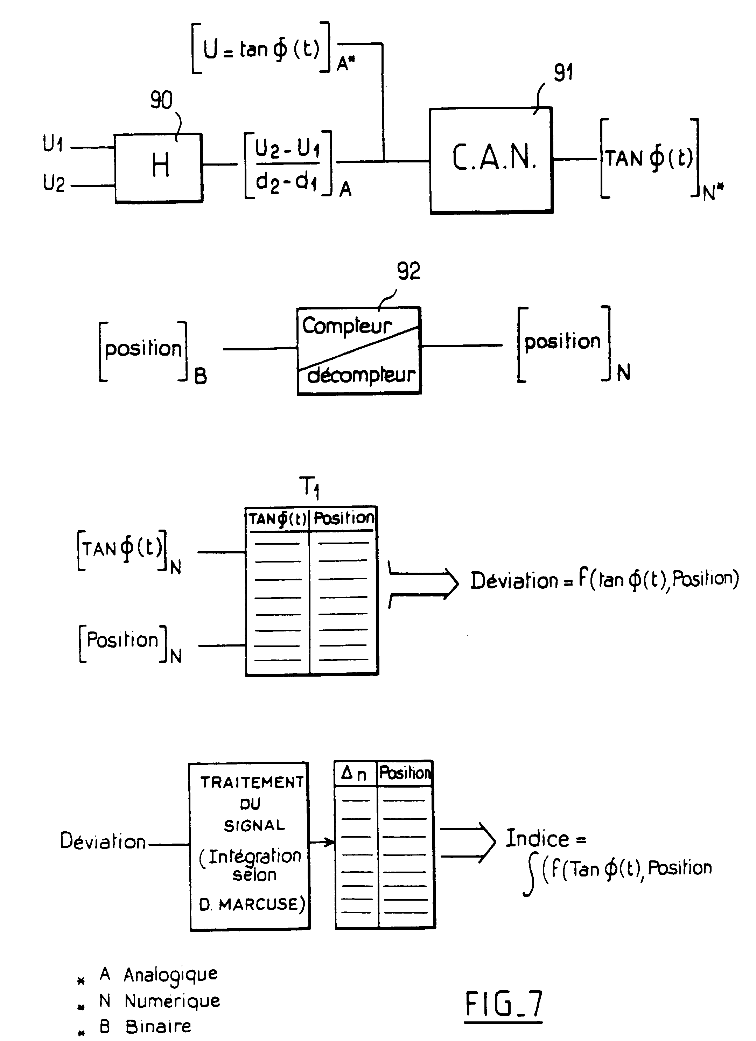

On se réfère maintenant à la Figure 7, où est représenté un mode de traitement des signaux électriques délivrés par les cellules de détection optiques 601 et 602 et la cellule de détection magnétique 61 des moyens de repérage spatial de la position du faisceau optique 53 incident par rapport à la préforme 1.

Un moyen de traitement analogique 90 reçoit en entrée les valeurs des tensions $U_1$ et $U_2$ précitées, ces tensions étant associées à une position de mesure z, et délivre en sortie une tension proportionnelle à la tangente de l'angle de déviation correspondant. Un convertisseur analogique/numérique (C.A.N.) 91, de 12 bits par exemple, permet d'en convertir la valeur sous forme numérique.

De façon simultanée, la position relative est également obtenue sous forme numérique par un compteur-décompteur 92, de 16 bits par exemple, qui reçoit pour chaque pas de mesure une impulsion d'incrément (pour le mouvement d'aller de la poignée par exemple) ou de décrément (pour le mouvement de retour).

Les valeurs numériques correspondant à la déviation et à la position sont stockées sous la forme d'un tableau à deux dimensions : on associe donc à une position donnée une déviation correspondante.

Le traitement de ce tableau de données est réalisé par une carte à microprocesseur, par exemple (non représentée sur la Figure 7).

Il est bien connu, dans l'approximation des rayons para-axiaux, que la variation Δn, par rapport à l'indice n de la couche externe correspondant au rayon a de la préforme, est reliée à l'angle de déviation par la formule :

$$\Delta n = -\frac{1}{\pi} \int_{r}^{a} \frac{\tan g\left[dev(z)\right]}{\sqrt{z^2 - r^2}} \, dz$$

où r est le rayon de la couche d'indice sondée - c'est-à-dire de la préforme - et a est le diamètre externe de la préforme étudiée. Le calcul d'intégration numérique permet d'obtenir un tableau de points à deux dimensions reliant à une position z donnée une variation d'indice $\Delta$n(z).

**Revendications**

1.  Appareil de mesure de profil d'indice d'une préforme de fibre optique (1) comportant une enveloppe externe et un coeur, comprenant :

    -   des moyens de support de la préforme ;
    -   des moyens d'émission (50 à 52 et 54) d'un faisceau optique (53) destiné à explorer une section transversale de la préforme (1) suivant un diamètre (D) de celle-ci ;
    -   une cellule de continuité d'indice (100 ; 100a) comprenant une enceinte (20) pourvue d'une ouverture traversante (27), assurant l'application de l'enceinte (20) autour d'une zone annulaire périphérique (212) de la préforme (1), et d'une cavité (10) ménagée dans l'enceinte (20) de manière à entourer l'enveloppe précitée et à être en communication optique avec celle-ci ;
    -   un milieu déformable et transparent (22) pour le faisceau optique (53), contenu dans la cavité (10) de l'enceinte (1) et assurant la continuité, c'est-à-dire l'isotropie, d'indice optique, autour de la préforme (1), par rapport à l'indice de l'enveloppe de celle-ci, et ce en passant d'une première surface optique (210), qui est une surface d'entrée (210) du faisceau optique (53) d'exploration diamètrale de la préforme (1), à travers ledit milieu (22), à une deuxième surface optique (211), qui est une surface de sortie (211) du faisceau optique (53), les première et deuxième surfaces optiques d'entrée et de sortie (210, 211) étant ménagées dans l'enceinte (20) transversalement par rapport à l'axe longitudinal (A) de la préforme (1), leur dimension transversale étant au moins égale au diamètre (D) de la préforme (1)
    -   des moyens d'exploration diamétrale (58a,58b,62,80) de la section transversale de la préforme (1), suivant son diamètre (D), par le faisceau optique (53) ;
    -   des moyens de repérage spatial (63) de la position du faisceau optique (53) incident sur la préforme (1), par rapport à la cellule de continuité d'indice (100 ; 100a) ;
    -   des moyens de réception (55,56,60) du faisceau optique (53) transmis à travers la préforme (1), avec déviation, par rapport à chaque point d'incidence du faisceau émis (53), ces moyens de réception (60) effectuant en outre la mesure de la déviation (dev) du faisceau (53) transmis à travers la préforme (1), par rapport à chaque point d'incidence, et délivrant un signal fonction de cette déviation (dev) ;
    -   des moyens (70) assurant le traitement de chacun des signaux délivrés par les moyens de réception et de mesure ainsi que le calcul de la variation d'indice ($\Delta$n) de la préforme (1), suivant un diamètre (D) de sa section transversale, par rapport à l'indice dudit milieu (22), et ce à partir d'un ensemble de mesures de déviations (dev),

    lequel appareil est caractérisé en ce que, entre le milieu déformable (22) d'isotropie d'indice et la surface externe de l'enveloppe de la préforme (1), existe une interface de séparation déformable et transparente (23 ; 23a) assurant l'adaptation du milieu déformable (22) d'isotropie d'indice à la surface externe de l'enveloppe de la préforme (1) sur au moins la zone annulaire (212) de celle-ci, qui correspond à une zone de mesure optique (212) située sur le parcours du faisceau optique (53), cette interface déformable et transparente (23 ; 23a), ainsi que les surfaces optiques d'entrée et de sortie (210,211) du faisceau optique (53), ayant un indice proche de l'indice dudit milieu déformable (22).

**2.** Appareil selon la revendication 1, caractérisé en ce que le milieu d'isotropie d'indice (22) est constitué par un produit transparent, liquide ou visqueux, en ce que l'interface déformable et transparente est constituée par une membrane annulaire élastique et imperméable (23), et en ce que l'appareil comporte également des moyens d'injection (25) du produit dans la cavité (10) de l'enceinte (20) de la cellule de continuité d'indice (100 ; 100a).

**3.** Appareil selon la revendication 2, caractérisé en ce que la membrane élastique et imperméable (23) se prolonge, à partir de chaque bord annulaire transversal, par rapport à l'axe longitudinal (A) de la préforme (1), d'abord radialement vers l'extérieur et, ensuite, longitudinalement vers l'intérieur de la zone de mesure optique (212), de manière à définir une chambre (23a) continue étanche, sensiblement toroïdale, destinée à être logée dans la cavité (10) de l'enceinte (20) et à être remplie du produit transparent précité (22).

**4.** Appareil selon l'une quelconque des revendications 1 à 3, caractérisé en ce qu'au moins les moyens d'émission (50 à 52 et 54) et de réception et mesure (55,56,60), conjointement avec les moyens d'exploration (58a,58b,62,80) diamétrale de la section transversale de la préforme (1) ainsi qu'avec les moyens de traitement et calcul précités (70), sont intégrés dans un ensemble unitaire faisant cellule de mesure (40), ayant sensiblement la configuration d'un fer à cheval (40) et destiné à coopérer avec l'enceinte (20) entourant la préforme (1) et contenant le milieu d'isotropie d'indice (22), pour effectuer la détermination du profil d'indice de cette préforme (1), les moyens d'émission (50 à 54) étant disposés à l'intérieur du premier bras (57a) de la cellule de mesure en fer à cheval (40), alors que les moyens de réception et de mesure (55,56,60) sont disposés dans le deuxième bras (57b), opposé au premier (57a), les premier et le deuxième bras (57a,57b) comportant respectivement une première fenêtre (72) de passage du faisceau (53) émis par le premier bras (57a) et une deuxième fenêtre (73) de passage du faisceau (53) reçu par le deuxième bras (57b).

**5.** Appareil selon la revendication 4, caractérisé en ce que les moyens d'exploration transversale de la préforme (1), intégrés dans la cellule de mesure (40), comprennent :

- deux rails de glissement relatif (58a,58b) entre la cellule de mesure (40) et la cellule de continuité d'indice (100 ; 100a), transversalement par rapport à l'axe longitudinal (A) de la préforme (1) ;
- deux gorges transversales (62) de guidage des deux rails de glissement relatif (58a,58b) ;
- des moyens d'entraînement (80) de la cellule de mesure (40) parallèlement aux surfaces d'entrée (210) et de sortie (211) de la cellule de continuité d'indice (100 ; 100a).

**6.** Appareil selon la revendication 5, caractérisé en ce que :

- les deux rails de glissement relatif (58a,58b) entre la cellule de mesure (40) et la cellule de continuité d'indice (100 ; 100a) sont ménagés sur les deux côtés internes des deux bras opposés (57a,57b) de la cellule de mesure en fer à cheval (40) ;
- les deux gorges de guidage (62) de ces deux rails de glissement relatif (58a,58b) sont ménagées dans deux côtés de la cellule de continuité d'indice (100 ; 100a), qui sont transversaux par rapport à l'axe longitudinal (A) de la préforme (1) et qui correspondent, respectivement, aux surfaces d'entrée et de sortie (210,211) du faisceau optique d'exploration transversale de la préforme (1), ces surfaces d'entrée et de sortie (210,211) occupant le fond des gorges de guidage (62).

**7.** Appareil selon la revendication 5, caractérisé en ce que :

- les deux rails de glissement relatif (58a,58b) entre la cellule de mesure (40) et la cellule de continuité d'indice (100 ; 100a) sont ménagés sur deux côtés de cette dernière, qui sont transversaux par rapport à l'axe longitudinal (A) de la préforme (1) et qui correspondent aux surfaces d'entrée et de sortie (210,211) du faisceau optique d'exploration transversale (53) de la préforme (1), ces surfaces d'entrée et de sortie (210,211) occupant le côté radialement externe des deux rails (58a,58b) ;
- les deux gorges de guidage (62) des deux rails de glissement relatif (58a,58b) sont ménagées dans les côtés internes des deux bras opposés (57a,57b) de la cellule de mesure en fer à cheval (40).

**8.** Appareil selon l'une quelconque des revendications 6 ou 7, caractérisé en ce que les moyens d'entraînement de la cellule de mesure (40) comprennent une poignée (80) ménagée dans le bras de liaison (59) entre les deux bras opposés (57a,57b) de cette cellule de mesure en fer à cheval (40), cette poignée (80) étant destinée à assurer le glissement progressif de la cellule de mesure (40) par un operateur, transversalement par rapport à l'axe longitudinal (A) de la préforme (1) et parallèlement aux surfaces d'entrée et de sortie (210,211) de la cellule de continuité d'indice (100 ; 100a), et ce à l'aide de moyens de repérage spatial (63) de la position (z) du faisceau optique (53) incident sur la préforme (1).

9.  Appareil selon l'une quelconque des revendications 6 ou 7, caractérisé en ce que les moyens d'entraînement de la cellule de mesure comprennent deux moteurs d'avancement pas à pas de deux crémaillères motrices, disposées chacune autour des côtés axialement externes de chaque rail de glissement relatif, ainsi que des logements qui sont distribués le long des parois opposées axialement internes de chaque gorge transversale de guidage d'un rail correspondant et qui sont destinés à recevoir les dents de la crémaillère correspondante, au fur et à mesure de l'avancement de celle-ci.

10. Appareil selon l'une quelconque des revendications 4 à 9, caractérisé en ce que dans la cellule de mesure (40) sont intégrés également des moyens d'affichage et/ou des moyens de saisie de données et/ou des moyens de restitution de données par interface ordinateur.

11. Appareil selon l'une quelconque des revendications 1 à 10, caractérisé en ce que les moyens de repérage spatial de la position (z) du faisceau optique (53) incident sur la préforme (1) comprennent une réglette magnétique (63) solidarisée à la cellule de continuité d'indice (100 ; 100a), notamment par collage, et alignée suivant la dimension transversale de la surface d'entrée (210) du faisceau d'exploration transversale (53) de la préforme (1).

12. Appareil selon l'une quelconque des revendications 1 à 11, caractérisé en ce que la cellule de continuité d'indice (100 ; 100a) coopère avec des moyens (30,31) assurant le maintien en position de cette cellule (100 ; 100a) par rapport à la zone de mesure (212) localisée sur la préforme (1).

13. Appareil selon la revendication 12, caractérisé en ce que les moyens de maintien en position de la cellule de continuité d'indice (100 ; 100a) comprennent deux anneaux (30) latéraux de serrage, disposés de part et d'autre par rapport à cette cellule (100 ; 100a) et équipés de joints toriques (31), notamment élastomères, logés chacun dans une gorge annulaire ménagée dans la paroi interne de chaque anneau (30), chaque joint torique (31) assurant le serrage à force de l'anneau correspondant (30) sur la préforme (1) et donc le maintien en position de la cellule de continuité d'indice (100 ; 100a) par rapport à cette préforme (1).

**Patentansprüche**

1.  Gerät zur Messung des Indexprofils eines Vorformlings einer aus einer äußeren Hülle und einem Kern bestehenden optischen Faser (1), umfassend:

    -   Mittel zum Halten des Vorformlings;
    -   Mittel (50 bis 52 und 54) zum Emittieren eines optischen Strahls (53), der zum Untersuchen eines Querschnitts des Vorformlings (1) entlang eines Durchmessers (D) des Vorformlings bestimmt ist;
    -   eine Indexkontinuitätszelle (100; 100a) mit einer Einfassung (20), die eine durchgehende Öffnung (27) aufweist, die ein Aufsetzen der Einfassung (20) um eine Ringzone (212) am Umfang des Vorformlings (1) gewährleistet, und die einen Hohlraum (10) aufweist, der derart in der Einfassung (20) ausgebildet ist, daß er die vorerwähnte Hülle umgibt und in optischer Verbindung mit dieser steht;
    -   ein verformbares und transparentes Medium (22) für den optischen Strahl (53), das in dem Hohlraum (10) der Einfassung (1) enthalten ist und die Kontinuität, d.h. die Isotropie, des optischen Index um den Vorformling (1) gewährleistet, und zwar bezüglich des Index von dessen Hülle sowie desjenigen des Durchgangs von einer ersten optischen Fläche (210), die eine Eintrittsfläche (210) für den optischen Strahl (53) zur diametralen Untersuchung des Vorformlings (1) darstellt, durch das genannte Medium (22) zu einer zweiten optischen Fläche (211), die eine Austrittsfläche (211) für den optischen Strahl (53) darstellt, wobei die erste und die zweite optische Eintritts- bzw. Austrittsfläche (210, 211) in der Einfassung (20) bezüglich der Längsachse (A) des Vorformlings (1) transversal angeordnet sind und ihre transversale Abmessung mindestens gleich dem Durchmesser (D) des Vorformlings (1) ist;
    -   Mittel (58a, 58b, 62, 80) zur diametralen Untersuchung des Querschnitts des Vorformlings (1) entlang dessen Durchmessers (D) mittels des optischen Strahls (53);
    -   Mittel (63) zur räumlichen Ortsbestimmung der Position des auf den Vorformling (1) auftreffenden optischen Strahls (53) bezüglich der Indexkontinuitätszelle (100; 100a);
    -   Mittel (55, 56, 60) zum Empfang des durch den Vorformling (1) mit Ablenkung bezüglich jedes Einfallspunktes des ausgesandten Strahls (53) durchtretenden optischen Strahls (53), wobei die Mittel (60) zum Empfang unter anderem die Messung der Ablenkung (dev) des durch den Vorformling (1) durchtretenden Strahls (53) bezüglich jedes Einfallspunktes vornehmen und ein von dieser Ablenkung (dev) abhängiges Signal ausgeben;

- Mittel (70), die die Verarbeitung jedes der von den Mitteln zum Empfang und zum Messen ausgegebenen Signale sowie die Berechnung der Indexabweichung (Δn) des Vorformlings (1) entlang eines Durchmessers (D) seines Querschnitts bezüglich dem Index des genannten Mediums (22) gewährleisten, und dies ausgehend von einem Satz von Messungen von Ablenkungen (dev),

dadurch gekennzeichnet, daß zwischen dem verformbaren Indexisotropie-Medium (22) und der Außenfläche der Hülle des Vorformlings (1) eine verformbare und transparente Trennfläche (23; 23a) vorhanden ist, die die Anpassung des verformbaren Indexisotropie-Mediums (22) an die Außenfläche der Hülle des Vorformlings (1) über mindestens dessen Ringzone (212) gewährleistet, die einer auf dem Weg des optischen Strahls (53) angeordneten optischen Meßzone (212) entspricht, wobei diese verformbare und transparente Trennfläche (23; 23a) sowie die optischen Eintritts- und Austrittsflächen (210, 211) des optischen Strahls (53) einen dem Index des verformbaren Mediums (22) naheliegenden Index aufweisen.

2. Gerät nach Anspruch 1, dadurch gekennzeichnet, daß das Indexisotropie-Medium (22) durch ein transparentes, flüssiges oder viskoses Produkt gebildet wird, daß die verformbare und transparente Trennfläche durch eine elastische und undurchlässige Ringmembran (23) gebildet wird und daß das Gerät auch Mittel (25) zur Injektion des Produkts in den Hohlraum (10) der Einfassung (20) der Indexkontinuitätszelle (100; 100a) umfaßt.

3. Gerät nach Anspruch 2, dadurch gekennzeichnet, daß die elastische und undurchlässige Membran (23) sich ausgehend von jedem transversalen Ringrand bezüglich der Längsachse (A) des Vorformlings (1) zuerst radial nach außen und dann longitudinal zum Innern der optischen Meßzone (212) verlängert, so daß sie eine ununterbrochene dichte Kammer (23a) definiert, die im wesentlichen toroid ist und dazu vorgesehen ist, in den Hohlraum (10) der Einfassung (20) eingesetzt und mit dem vorerwähnten transparenten Produkt (22) gefüllt zu sein.

4. Gerät nach einem der Ansprüche 1 bis 3, dadurch gekennzeichnet, daß mindestens die Emissionsmittel (50 bis 52 und 54) und die Empfangs- und meßmittel (55, 56, 60) zusammen mit den Mitteln (58a, 58b, 62, 80) zur diametralen Untersuchung des Querschnitts des Vorformlings (1) sowie mit den vorerwähnten Mitteln (70) zur Verarbeitung und Berechnung in einem eine Meßzelle (40) bildenden einheitlichen Aufbau integriert sind, der im wesentlichen die Form eines Hufeisens (40) aufweist und dazu vorgesehen ist, mit der den Vorformling (1) umgebenden Einfassung (20) zusammenzuwirken und der das Indexisotropie-Medium (22) enthält, um die Bestimmung des Indexprofils dieses Vorformlings (1) vorzunehmen, wobei die Emissionsmittel (50 bis 54) im Innern des ersten Arms (57a) der hufeisenförmigen Meßzelle (40) angeordnet sind, während die Empfangs- und Meßmittel (55, 56, 60) in dem dem ersten Arm (57a) gegenüberliegenden zweiten Arm (57b) angeordnet sind und der erste und zweite Arm (57a, 57b) ein erstes Durchtrittsfenster (72) des von dem ersten Arm (57a) ausgesandten Strahls (53) bzw. ein zweites Durchtrittsfenster (73) des von dem zweiten Arm (57b) empfangenden Strahls (53) aufweisen.

5. Gerät nach Anspruch 4, dadurch gekennzeichnet, daß die in die Meßzelle (40) integrierten Mittel zur transversalen Untersuchung des Vorformlings (1) umfassen:

- zwei Schienen (58a, 58b) zur relativen Verschiebung zwischen der Meßzelle (40) und der Indexkontinuitätszelle (100; 100a) transversal bezüglich der Längsachse (A) des Vorformlings (1);
- zwei transversale Rillen (62) zur Führung der beiden Schienen (58a, 58b) zur relativen Verschiebung;
- Mittel (80) zum Ziehen der Meßzelle (40) parallel zu der Eintrittsfläche (210) und der Austrittsfläche (211) der Indexkontinuitätszelle (100; 100a).

6. Gerät nach Anspruch 5, dadurch gekennzeichnet, daß:

- die beiden Schienen (58a, 58b) zur relativen Verschiebung zwischen der Meßzelle (40) und der Indexkontinuitätszelle (100; 100a) auf den beiden Innenseiten der beiden gegenüberliegenden Arme (57a, 57b) der hufeisenförmigen Meßzelle (40) ausgebildet sind;
- die beiden Rillen (62) zur Führung dieser beiden Schienen (58a, 58b) zur relativen Verschiebung in zwei Seiten der Indexkontinuitätszelle (100; 100a) ausgebildet sind, die transversal bezüglich der Längsachse (A) des Vorformlings (1) verlaufen und die der Eintrittsfläche bzw. der Austrittsfläche (210, 211) des optischen Strahls zur transversalen Untersuchung des Vorformlings (1) entsprechen, wobei die Eintritts- und die Austrittsfläche (210, 211) den Boden der Führungsrillen (62) einnehmen.

**7.** Gerät nach Anspruch 5, dadurch gekennzeichnet, daß:

- die beiden Schienen (58a, 58b) zur relativen Verschiebung zwischen der Meßzelle (40) und der Indexkontinuitätszelle (100; 100a) auf zwei Seiten der letzteren angeordnet sind, die transversal bezüglich der Längsachse (A) des Vorformlings (1) verlaufen und die der Eintritts- und der Austrittsfläche (210, 211) des optischen Strahls (53) zur transversalen Untersuchung des Vorformlings (1) entsprechen, wobei die Eintritts- und die Austrittsfläche (210, 211) die radiale Außenseite der beiden Schienen (58a, 58b) einnehmen;
- die beiden Rillen (62) zur Führung der beiden Schienen (58a, 58b) zur relativen Verschiebung in den Innenseiten der beiden gegenüberliegenden Arme (57a, 57b) der hufeisenförmigen Meßzelle (40) angeordnet sind.

**8.** Gerät nach einem der Ansprüche 6 oder 7, dadurch gekennzeichnet, daß die Mittel zum Ziehen der Meßzelle (40) einen Griff (80) umfassen, der in dem Verbindungsarm (59) zwischen den beiden gegenüberliegenden Armen (57a, 57b) dieser hufeisenförmigen Meßzelle (40) angeordnet ist, wobei der Griff (80) dazu vorgesehen ist, das fortschreitende Verschieben der Meßzelle (40) transversal bezüglich der Längsachse (A) des Vorformlings (1) und parallel zu den Eintritts- und Austrittsflächen (210, 211) der Indexkontinuitätszelle (100; 100a) durch eine Bedienperson zu gewährleisten, und dies mit Hilfe von Mitteln (63) zur räumlichen Ortsbestimmung der Position (z) des auf den Vorformling (1) auftreffenden optischen Strahls (53).

**9.** Gerät nach einem der Ansprüche 6 oder 7, dadurch gekennzeichnet, daß die Mittel zum Ziehen der Meßzelle zwei Schrittmotoren mit zwei Treibzahnstangen, die jede um die axialen Außenseiten jeder Schiene zur relativen Verschiebung angeordnet sind, sowie Aufnahmen umfassen, die entlang den axial gegenüberliegenden Innenwandungen jeder transversalen Rille zur Führung einer entsprechenden Schiene verteilt und dazu vorgesehen sind, die Zähne der entsprechenden Zahnstange im gleichen Maße wie deren Vorschubbewegung aufzunehmen.

**10.** Gerät nach einem der Ansprüche 4 bis 9, dadurch gekennzeichnet, daß in der Meßzelle (40) auch Mittel zur Anzeige und/oder Mittel zur Erfassung von Daten und/oder Mittel zur Datenwiedergabe über Computerinterface integriert sind.

**11.** Gerät nach einem der Ansprüche 1 bis 10, dadurch gekennzeichnet, daß die Mittel zur räumlichen Ortsbestimmung der Position (z) des auf den Vorformling (1) auftreffenden optischen Strahls (53) eine insbesondere durch Verkleben fest mit der Indexkontinuitätszelle (100; 100a) verbundene und mit der transversalen Abmessung der Eintrittsfläche (210) des Strahls (53) zur transversalen Untersuchung des Vorformlings (1) ausgerichteten Magnetleiste (63) umfassen.

**12.** Gerät nach einem der Ansprüche 1 bis 11, dadurch gekennzeichnet, daß die Indexkontinuitätszelle (100; 100a) mit Mitteln (30, 31) zusammenwirkt, die die Aufrechterhaltung der Position dieser Zelle (100; 100a) bezüglich der auf dem Vorformling lokalisierten Meßzone (212) gewährleisten.

**13.** Gerät nach Anspruch 12, dadurch gekennzeichnet, daß die Mittel zur Aufrechterhaltung der Position der Indexkontinuitätszelle (100; 100a) zwei laterale Klemmringe (30) umfassen, die beiderseits dieser Zelle (100; 100a) angeordnet und mit insbesondere elastomeren O-Ringen (31) ausgestattet sind, die jeweils in einer in der Innenwandung jedes Ringes (30) ausgebildeten Ringnut angeordnet sind und die die kraftmäßige Einspannung des entsprechenden Ringes (30) auf dem Vorformling (1) und somit die Aufrechterhaltung der Position der Indexkontinuitätszelle (100; 100a) bezüglich dieses Vorformlings (1) gewährleisten.

**Claims**

**1.** Apparatus for measuring the index profile of an optical fiber preform (1) comprising an outer envelope and a core, the apparatus comprising:

preform support means;
emission means (50 to 52 and 54) for emitting a light beam (53) that is to scan a cross-section of the preform (1) along a diameter (D) thereof;
an index continuity cell (100; 100a) comprising an enclosure (20) provided with a through opening (27), and serving to press the enclosure (20) around a peripheral annular zone (212) of the preform (1), together with a cavity (10) formed inside the enclosure (20) so as to surround the above-specified envelope and so as to be in optical communication therewith;

a medium (22) that is deformable and transparent for the light beam (53) being contained inside the cavity (10) of the enclosure (1) and providing optical index continuity, i.e. isotropy, around the preform (1) and relative to the index of the envelope thereof, this being done by passing through a first optical surface (210) constituting an inlet surface (210) for the light beam (53) that scans the preform (1) diametrically, through said medium (22), and through a second optical surface (211) which constitutes an outlet surface (211) for the light beam (53), the inlet and outlet first and second optical surfaces (210, 211) being provided in the enclosure (20) transversely relative to the longitudinal axis (A) of the preform (1), their transverse size being at least equal to the diameter (D) of the preform (1);

scanning means (58a, 58b, 62, 80) for diametrically scanning the light beam (53) across the cross-section of the preform (1) along the diameter (D) thereof;

position determining means (63) for determining the position of the incident light beam (53) on the preform (1) relative to the index continuity cell (100; 100a);

receiver and measurement means (55, 56, 60) for receiving the light beam (53) transmitted through the preform (1), together with deflection, relative to each incidence point of the emitted beam (53), said receiver and measurement means (60) also serving to measure the deflection (dev) of the beam (53) transmitted through the preform (1) relative to each incidence point, and delivering a signal that is a function of said deflection (dev);

means (70) for processing each of the signals delivered by the receiver and measurement means and also for calculating the variation in the index ($\Delta n$) of the preform (1) along a diameter (D) of its cross-section relative to the index of said medium (22), with this being done on the basis of a set of measurements of deflection (dev);

which apparatus is characterized in that a deformable and transparent separation interface (23; 23a) exists between the deformable index isotropy medium (22) and the outside surface of the envelope of the preform (1), said interface serving to adapt the deformable index isotropy medium (22) to the outside surface of the envelope of the preform (1) at least over an angular zone (212) thereof, which zone corresponds to an optical measurement zone (212) situated on the path of the light beam (53), said deformable and transparent interface (23; 23a), and said inlet and outlet optical surfaces (210, 211) for the light beam (53) having a refractive index close to the index of said deformable medium (22).

2. Apparatus according to claim 1, characterized in that the index isotropy medium (22) is constituted by a liquid or viscous transparent substance, in that the deformable and transparent interface is constituted by a resilient and impermeable membrane (23), and in that the apparatus also includes injection means (25) for injecting the substance into the cavity (10) of the enclosure (20) of the index continuity cell (100; 100a).

3. Apparatus according to claim 2, characterized in that the resilient and impermeable membrane (23) is extended from each of its transverse annular edges relative to the longitudinal axis (A) of the preform (1) firstly radially outwardly and secondly longitudinally inwardly from the optical measurement zone (212) so as to define a substantially toroidal fluid-tight continuous chamber (23a) designed to be received in the cavity (10) of the enclosure (20) and to be filled with the above-mentioned transparent substance (22).

4. Apparatus according to any one of claims 1 to 3, characterized in that at least the emission means (50 to 52 and 54) and the receiver and measurement means (55, 56, 60), in association with the scanning means (58a, 58b, 62, 80) for diametrically scanning the cross-section of the preform (1) and also with the above-mentioned calculating and processing means (70) are integrated in a unitary assembly constituting a measurement cell (40), which is substantially in the form of a horseshoe (40) and is designed to co-operate with the enclosure (20) surrounding the preform (1) and containing the index isotropy medium (22) for the purpose of determining the index profile of said preform (1), the emission means (50 to 54) being disposed inside a first arm (57a) of the horseshoe-shaped measurement cell (40) while the receiver and measurement means (55, 56, 60) are disposed in the second arm (57b) thereof opposite to the first (57a), the first and second arms (57a, 57b) respectively including a first window (72) for passing the beam (53) emitted by the first arm (57a), and a second window (73) for passing the beam (53) received by the second arm (57b).

5. Apparatus according to claim 4, characterized in that the scanning means for scanning the preform (1) transversely and integrated in the measurement cell (40) comprise:

two relative slide rails (58a, 58b) between the measurement cell (40) and the index continuity cell (100; 100a), extending transversely relative to the longitudinal axis (A) of the preform (1);

two transverse guide grooves (62) for the two relative slide rails (58a, 58b); and

drive means (80) for driving the measurement cell (40) parallel to the inlet and outlet surfaces (210, 211) of the index continuity cell (100; 100a).

6. Apparatus according to claim 5, characterized in that:

the two relative slide rails (58a, 58b) between the measurement cell (40) and the index continuity cell (100; 100a) are provided on the two inside faces of the two opposite arms (57a, 57b) of the horseshoe-shaped measurement cell (40); and
the two guide grooves (62) for said two relative slide rails (58a, 58b) are formed in two sides of the index continuity cell (100; 100a), which sides extend transversely relative to the longitudinal axis (A) of the preform (1) and correspond respectively to the inlet and outlet surfaces (210, 211) for the light beam for transversely scanning the preform (1), said inlet and outlet surfaces (210, 211) occupying the bottoms of the guide grooves (62).

7. Apparatus according to claim 5, characterized in that:

the two relative slide rails (58a, 58b) between the measurement cell (40) and the index continuity cell (100; 100a) are provided on two sides of the index continuity cell, which sides extend transversely relative to the longitudinal axis (A) of the preform (1) and correspond to the inlet and outlet surfaces (210, 211) for the light beam (53) for transversely scanning the preform (1), said inlet and outlet surfaces (210, 211) occupying the radially outermost sides of the two rails (58a, 58b); and
the two guide grooves (62) for the two relative slide rails (58a, 58b) are provided in the inside faces of the two opposite arms (57a, 57b) of the horseshoe-shaped measurement cell (40).

8. Apparatus according to claim 6 or 7, characterized in that the drive means for driving the measurement cell (40) comprise a handle (80) formed in the web (59) linking together the two opposite arms (57a, 57b) of said horseshoe-shaped measurement cell (40), said handle (80) being designed to enable an operator to cause the measurement cell (40) to slide progressively transversely relative to the longitudinal axis (A) of the preform (1) and parallel to the inlet and outlet surfaces (210, 211) of the index continuity cell (100; 100a), with this being done with the assistance of position determining means (63) for determining the position (z) of the incident light beam (53) on the preform (1).

9. Apparatus according to claim 6 or 7, characterized in that the drive means for driving the measurement cell comprise two stepper motors for two driving racks each disposed on the axially outer sides of each relative slide rail, together with housings distributed along the opposite axially inner walls of each transverse guide groove for a corresponding rail and designed to receive the teeth of the corresponding rack as the rack advances.

10. Apparatus according to any one of claims 4 to 9, characterized in that the measurement cell (40) also has integrated therein display means and/or data input means and/or means for playing back data from the computer interface.

11. Apparatus according to any one of claims 1 to 10, characterized in that the means for determining the position (z) of the incident light beam (53) on the preform (1) comprise a magnetic strip (63) secured to the index continuity cell (100; 100a) in particular by means of adhesive, and in alignment with the transverse dimension of the inlet surface (210) of the beam (53) for performing transverse scanning of the preform (1).

12. Apparatus according to any one of claims 1 to 11, characterized in that the index continuity cell (100; 100a) co-operates with means (30, 31) for holding said cell (100; 100a) in position relative to the measurement zone (212) localized on the preform (1).

13. Apparatus according to claim 12, characterized in that the means for holding the index continuity cell (100; 100a) in position comprise two lateral clamping collars (30) disposed on either side of said cell (100; 100a) and fitted with respective sealing rings (31), in particular rings made of elastomer, each received in an annular groove formed in the inside wall of the associated collar (30), each sealing ring (31) serving to apply clamping force from the corresponding collar (30) to the preform (1), thereby maintaining the index continuity cell (100; 100a) in position relative to said preform (1).

FIG.1

FIG_2

FIG. 3

FIG_4

FIG.5

$$U = k \, tang \, (dev)$$

FIG.6

$$\frac{U_2 - U_1}{d_2 - d_1} = k\,tg(dev)$$

$$\left[ U = \tan \phi (t) \right]_{A^*}$$

$U_1$ —

$U_2$ —

90

H

$$\left[ \frac{U_2 - U_1}{d_2 - d_1} \right]_A$$

91

C.A.N.

$$\left[ TAN \, \phi (t) \right]_{N^*}$$

$$\left[ position \right]_B$$

92

Compteur

décompteur

$$\left[ position \right]_N$$

$T_1$

| TAN $\phi(t)$ | Position |
|---|---|
| | |

⟹ Déviation = $f(\tan \phi(t), Position)$

$$\left[ TAN \, \phi (t) \right]_N$$

$$\left[ Position \right]_N$$

TRAITEMENT DU SIGNAL

(Intégration selon

D. MARCUSE)

| Δn | Position |
|---|---|
| | |

Déviation —

⟹ Indice = $\int (f(Tan \, \phi(t), Position)$

* A Analogique
* N Numérique
* B Binaire

FIG_7

20